Europäisches Patentamt

European Patent Office

Office européen des brevets

(11) Publication number: **0 277 695 B1**

## EUROPEAN PATENT SPECIFICATION

(45) Date of publication of patent specification: **15.07.92**    (51) Int. Cl.[5]: **C08G 67/02**

(21) Application number: **88200184.5**

(22) Date of filing: **02.02.88**

(54) Olefin/CO copolymerization process.

(30) Priority: **03.02.87 NL 8700255**

(43) Date of publication of application:
**10.08.88 Bulletin 88/32**

(45) Publication of the grant of the patent:
**15.07.92 Bulletin 92/29**

(84) Designated Contracting States:
**BE DE FR GB IT NL**

(56) References cited:
EP-A- 0 043 382          EP-A- 0 121 965
EP-A- 0 186 228          EP-A- 0 219 906
EP-A- 0 248 483          US-A- 3 694 412

**"Steric Effects of Phosphorus Ligands in Organometallic Chemistry and Homogeneous Catalysis" Ch. A. Tolman, Chem. Reviews 1977, Vol. 77, No. 3, p. 337**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **Drent, Eit**
**Badhuisweg 3**
**NL-1031 CM Amsterdam(NL)**
Inventor: **Van Leeuwen, Petrus Wilhelmus**
**Nicolaas Maria**
**Badhuisweg 3**
**NL-1031 CM Amsterdam(NL)**
Inventor: **Wife, Richard Lewin**
**Badhuisweg 3**
**NL-1031 CM Amsterdam(NL)**

## Description

The invention relates to the polymerization of carbon monoxide with one or more olefinically unsaturated compounds.

High molecular weight polymers of carbon monoxide with one or more olefinically unsaturated compounds (for the sake of brevity referred to as A), in which the monomer units occur in alternating order and which polymers therefore consist of units of the general formula -CO-(A')- wherein A' represents a monomer unit derived from a monomer A used, can be prepared by using catalyst compositions based upon

a) a palladium compound,

b) an anion of an acid with a pKa of less than 4, with the proviso that the acid is not a hydrohalogenic acid, and

c) triphenyl phosphine.

Such a process is known from Applicant's patent application EP-A-121965, Example I, comparative test 1a. Under the conditions employed, however, the yield of polymer was negligible. Later the Applicant has improved the reaction conditions such that a small amount of polymer could be recovered, e.g. by increasing the reaction time (cf. comparative example 1 in non-prepublished EP-A-259914 of earlier date). Though the triphenyl phosphine (monodentate) ligands would be attractive catalyst components because of their simplicity, the yield of polymer attainable when using these catalyst compositions remained, however, unsatisfactorily low.

Research made into these catalyst compositions by the Applicant has shown that their activities can be much enhanced by introducing at least one substituent in each of the phenyl groups in the phosphine used as component c) at a position ortho in respect to phosphorus. More in general, it has been found that on the basis of the aforementioned components a) and b) and, for component c), a triphenyl phosphine in which each of the phenyl groups bears at least one substituent in a position ortho to phosphorus, there can be composed catalyst compositions having attractive activities for the polymerization of carbon monoxide with one or more olefinically unsaturated compounds.

The present patent application therefore relates to a process for the preparation of polymers, wherein a mixture of carbon monoxide and one or more olefinically unsaturated compounds is polymerized by using a catalyst composition comprising

a) a palladium compound,

b) an anion of an acid with a pKa of less than 4, with the proviso that the acid is not a hydrohalogenic acid, and

c) a triphenyl phosphine,

wherein the catalyst composition includes a triphenyl phosphine in which each of the phenyl groups bears at least one substituent in ortho-position in respect to phosphorus, as component c).

Preferably, the palladium compound used as component a) is a palladium salt of a carboxylic acid and in particular palladium acetate. As examples of suitable acids with a pKa of less than 4 (determined in aqueous solution at 18 °C) whose anions should be present in the catalyst compositions as component b), may be mentioned, inter alia, mineral acids, such as perchloric acid, sulphuric acid, phosphoric acid and nitric acid, sulphonic acids, such as 2-hydroxypropane-2-sulphonic acid, para-toluenesulphonic acid, methanesulphonic acid and trifluoromethanesulphonic acid, and carboxylic acids, such as trifluoroacetic acid, trichloroacetic acid, dichloroacetic acid, difluoroacetic acid, tartaric acid and 2,5-dihydroxybenzoic acid. Preferably, the catalyst composition contains an anion of an acid with a pKa of less than 2, and in particular an anion of a sulphonic acid, such as para-toluene-sulphonic acid or, an anion of a carboxylic acid, such as trifluoroacetic acid. The preferred quantity of component b) present in the catalyst compositions ranges from 0.5 to 200 and in particular from 1.0 to 100 equivalents per gram atom of palladium. Component b) may be incorporated in the catalyst compositions either in the form of an acid or as a salt. Eligible salts are, inter alia, non-noble transition metal salts. When a component b) is used in the form of a salt of a non-noble transition metal, preference is given to a coppersalt. Optionally, components a) and b) may be combined in a single compound. An example of such a compound is palladium para-tosylate.

The components c) that are used in the catalyst compositions of the invention are triphenyl phosphines in which each of the phenyl groups bears at least one substituent in a position ortho to phosphorus and in particular triphenyl phosphines in which the three phenyl groups are similar to one another. Both polar and non-polar substituents are eligible substituents of which there should be at least one present in a position ortho to phosphorus in at least one of the phenyl groups. Examples of non-polar substituents are hydrocarbyl groups, such as methyl, ethyl and propyl groups. Good results have been obtained with catalyst compositions of the invention containing tri(2-methylphenyl)phosphine as the component c) Examples of polar substituents are alkoxy groups, such as methoxy, ethoxy and propoxy groups, alkoxycarbonyl groups, such as the methoxycarbonyl group, halogens, such as chlorine and bromine, the cyano group and the hydroxyl group. Good results have been obtained with catalyst compositions of the invention containing tri(2-methoxyphenyl)phosphine as the component c).

In the triphenyl phosphines occurring in the catalyst compositions of the invention, at least one of the phenyl groups should hold at least one substituent in a positions ortho to phosphorus. In addition, the ortho-substituted phenyl group may contain one or more further polar or non-polar substituents. For instance, a phenyl group which holds a hydrocarbyl group in the 2-position in respect to phosphorus, may have a second hydrocarbyl group in the 3-position. The two hydrocarbyl groups may thogether form part of a cyclic structure. The 1-naphthyl group may be regarded as representative of this class. Good results have been obtained with catalyst compositions of the invention containing tri(1-naphthyl)phosphine as the component c).

In the catalyst compositions of the invention the triphenyl phosphines are preferably applied in a quantity of 0.1-100 and in particular of 0.5-50 mol per mol of palladium compound.

In order to improve the activity of the present catalyst compositions it is preferred that a quinone be included therein as a compound d). Besides benzoquinones which may or may not be substituted, other quinones, such as unsubstituted or substituted naphthaquinones and anthraquinones, are also eligible for use. Benzoquinones are preferred, especially 1,4-benzoquinone. The quantity of quinone used preferably amounts to 1-10000, and in particular 10-5000, mol per gram atom of palladium.

The polymerization by using the catalyst compositions according to the invention is preferably carried out in a liquid diluent. Very suitable liquid diluents are lower alcohols, such as methanol and ethanol. The polymerization may also be performed in the gaseous phase, if desired.

Eligible olefinically unsaturated organic compounds that can be polymerized with carbon monoxide with the aid of the catalyst compositions according to the invention are both compounds consisting exclusively of carbon and hydrogen and compounds which, in addition to carbon and hydrogen, contain one or more hetero-atoms. The catalyst compositions according to the invention are preferably used for preparing polymers of carbon monoxide with one or more olefinically unsaturated hydrocarbons. Examples of suitable hydrocarbon monomers are ethene and other $\alpha$-olefins, such as propene, butene-1, hexene-1 and octene-1 as well as styrene and alkyl-substituted styrenes, such as p-methyl styrene and p-ethyl styrene. The catalyst compositions according to the invention are especially suitable for use in preparation of copolymers of carbon monoxide and ethane and in the preparation of terpolymers of carbon monoxide with ethene and another olefinically unsaturated hydrocarbon, in particular propene.

The quantity of catalyst composition used in the preparation of the polymers may vary within wide ranges. Per mol of olefinically unsaturated compound to be polymerized, such a quantity of catalyst is preferably used as to contain $10^{-7}$-$10^{-3}$, and in particular $10^{-6}$-$10^{-4}$, gram atom of palladium.

The preparation of the polymers is preferably carried out at a temperature of 20-200 °C and a pressure of 1-200 bar and in particular at a temperature of 30-150 °C and a pressure of 20-100 bar. In the mixture to be polymerized, the molar ratio of the olefinically unsaturated compounds relative to carbon monoxide is preferably 10:1-1:5 and in particular 5:1-1:2. The carbon monoxide used in the polymer preparation of the invention need not be pure. It may contain such contaminants as hydrogen, carbon dioxide and nitrogen.

The invention will now be illustrated with the aid of the following examples.

Example 1 (Comparative example)

A carbon monoxide/ethane copolymer was prepared as follows. A magnetically stirred autoclave of 250 ml capacity was charged with a catalyst solution consisting of:
50 ml of methanol
0.1 mmol of palladium acetate,
2.0 mmol of p-toluenesulphonic acid, and
0.3 mmol of triphenyl phosphine.
After air present in the autoclave was removed by evacuation, ethane was introduced until the pressure of 30 bar was reached, followed by carbonmonoxide until a pressure of 60 bar was reached. Then, the contents of the autoclave were brought to 110 °C. After 5 hours the polymerization was terminated by cooling down to room temperature and then releasing the pressure. The polymer formed was filtered off, washed with methanol and dried in vacuo at room temperature.

The polymerization rate was 5 g of copolymer/g of palladium•hour.

Example 2

A carbon monoxide/ethene copolymer was prepared in substantially the same manner as the copolymer in Example 1, the differences being that:
a) the catalyst solution contained 1.0 mmol instead of 2 mmol of para-toluenesulphonic acid and 0.15 mmol of tri(2-methylphenyl)phosphine instead of 0.3 mmol of triphenyl phosphine, and
b) the reaction temperature was 80 °C instead of 110 °C.

The polymerization rate was 20 mg of copolymer/g of palladium•hour.

## Example 3

A carbon monoxide/ethene copolymer was prepared in substantially the same manner as the copolymer in Example 1, the difference being that:

a) the catalyst solution contained 1.0 mmol instead of 2 mmol of para-toluenesulphonic acid and 0.3 mmol of tri(2-methoxyphenyl)phosphine instead of 0.3 mmol of triphenyl phosphine, and

b) the reaction temperature was 105 °C instead of 110 °C.

The polymerization rate was 20 g of copolymer/g of palladium•hour.

## Example 4

A carbon monoxide/ethene copolymer was prepared in substantially the same manner as the copolymer in Example 1, the difference being that the catalyst solution contained 1.0 mmol instead of 2.0 mmol of para-toluenesulphonic acid and 0.15 of tri(1-naphthyl)phosphine instead of 0.3 mmol of triphenyl phosphine.

The polymerization rate was 130 g of copolymer/g of palladium•hour.

With the aid of $^{13}$C-NMR analysis it was established that the carbon monoxide/ethene copolymer prepared according to Examples 1-4 had a linear alternating structure and therefore consisted of units of the formula -CO-(C$_2$H$_4$)-.

The copolymer had a melting point of 257 °C. Of Examples 1-4, Examples 2-4 are examples according to the invention. Example 1 falls outside the scope of the invention and has been included in the patent application for comparison.

Comparison of Example 1 (carried out at 110 °C and using a catalyst composition which contained an unsubstituted triphenyl phosphine as the component c)) with Examples 2-4 (carried ont at temperature of 80-110 °C and using catalyst compositions of the invention which contained an ortho-substituted triphenyl phosphine as the component c)) shows that at equal or lower temperature reaction rates can be achieved by using the catalyst compositions of the invention.

## Claims

1. Process for the preparation of polymers, wherein a mixture of carbon monoxide and one or more olefinically unsaturated compounds is polymerized by using a catalyst composition, comprising

a) a palladium compound,

b) an anion of an acid with a pKa of less than 4, with the proviso that the acid is not a hydrohalogenic acid, and

c) a triphenyl phosphine, characterized in that the catalyst composition includes a triphenyl phosphine in which each of the phenyl groups bears at least one substituent in ortho-position in respect to phosphorus, as component c).

2. Process as claimed in claim 1, characterized in that the catalyst composition is based upon a palladium salt of a carboxylic acid as component a).

3. Process as claimed in claim 2, characterized in that the catalyst composition is based upon an anion of a sulphonic acid or trifluoroacetic acid as component b).

4. Process as claimed in one or more of claims 1-3, characterized in that component b) is present in the catalyst composition in a quantity of from 1.0 to 100 equivalents per gram atom of palladium.

5. Process as claimed in one or more of claims 1-4, characterized in that component b) is incorporated in the catalyst composition in the form of an acid or in the form of a non-noble transition metal salt, preferably a copper salt.

6. Process as claimed in one or more of claims 1 to 5, characterized in that the catalyst composition includes tri(2-methylphenyl)phosphine, tri(2-methoxyphenyl)phosphine or tri(1-naphthyl)phosphine, as component c).

7. Process as claimed in one or more of claims 1-6, characterized in that in addition the catalyst composition includes a quinone as component d), in a quantity of from 10 to 5000 mol per gram atom of palladium.

8. Process as claimed in one or more of claims 1-7, characterized in that carbon monoxide is copolymerized with ethene, or a mixture of ethene and propene.

## Revendications

1. Procédé de préparation de polymères, dans lequel un mélange de monoxyde de carbone et d'un ou plusieurs composés à insaturation oléfinique est polymérisé au moyen d'une composition catalytique comprenant

a) un composé de palladium,

b) un anion d'un acide ayant un pKa inférieur à 4, à condition que l'acide ne soit pas un acide halogénhydrique, et

c) une triphénylphosphine,

caractérisé en ce que la composition catalytique renferme une triphénylphosphine dans laquelle chacun des groupes phényle porte au moins un substituant en position ortho par rapport au phosphore, comme constituant c).

2. Procédé selon la revendication 1, caractérisée en ce que la composition catalytique est à base d'un sel de palladium d'un acide carboxylique comme constituant a).

3. Procédé selon la revendication 2, caractérisé en ce que la composition catalytique est à base d'un anion d'un acide sulfonique ou d'un acide trifluoroacétique comme constituant b).

4. Procédé selon l'une quelconque des revendications 1-3, caractérisé en ce que le constituant b) est présent dans la composition catalytique en une quantité de 1,0 à 100 équivalents par atome-gramme de palladium.

5. Procédé selon l'une quelconque des revendications 1-4, caractérisé en ce que le constituant b) est incorporé dans la composition catalytique sous la forme d'un acide ou sous la forme d'un sel de métal de transition non noble, de préférence un sel de cuivre.

6. Procédé selon l'une quelconque des revendications 1 à 5, caractérisé en ce que la composition catalytique renferme de la tri(2-méthylphényl)phosphine, de la tri(2-méthoxyphényl)phosphine ou de la tri(1-naphtyl)phosphine comme constituant c).

7. Procédé selon l'une quelconque des revendications 1 à 6, caractérisé en ce que la composition catalytique renferme, en outre, une quinone comme constituant d), en une quantité de 10 à 5000 moles par atome-gramme de palladium.

8. Procédé selon l'une quelconque des revendications 1 à 7, caractérisé en ce que le monoxyde de carbone est copolymérisé avec de l'éthène, ou un mélange d'éthène et de propène.

**Patentansprüche**

1. Verfahren zur Herstellung von Polymeren, wobei ein Gemisch von Kohlenmonoxid und einer oder mehreren olefinisch ungesättigten Verbindungen polymerisiert wird unter Verwendung eines Katalysators, umfassend

a) eine Palladiumverbindung,

b) ein Anion einer Säure mit einem pKa-Wert von weniger als 4, mit der Maßgabe, daß die Säure keine Halogenwasserstoffsäure ist, und

c) ein Triphenylphosphin,

dadurch gekennzeichnet, daß der Katalysator ein Triphenylphosphin umfaßt, bei dem jede der Phenylgruppen mindestens einen Substituenten in o-Stellung, bezogen auf Phosphor, enthält, als Komponente c).

2. Verfahren nach Anspruch 1, dadurch gekennzeichnet, daß der Katalysator auf einem Palladiumsalz einer Carbonsäure als Komponente a) basiert.

3. Verfahren nach Anspruch 2, dadurch gekennzeichnet, daß der Katalysator auf einem Anion einer Sulfonsäure oder Trifluoressigsäure als Komponente b) basiert.

4. Verfahren nach einem oder mehreren der Ansprüche 1 bis 3, dadurch gekennzeichnet, daß die Komponente b) in dem Katalysator in einer Menge von 1,0 bis 100 Äq pro gAtom Palladium vorhanden ist.

5. Verfahren nach einem oder mehreren der Ansprüche 1 bis 4, dadurch gekennzeichnet, daß die Komponente b) in dem Katalysator in Form einer Säure oder in Form eines nicht-edlen Übergangsmetallsalzes, vorzugsweises eines Kupfersalzes, vorhanden ist.

6. Verfahren nach einem oder mehreren der Ansprüche 1 bis 5, dadurch gekennzeichnet, daß der Katalysator Tri(2-methylphenyl)phosphin, Tri(2-methoxyphenyl)phosphin oder Tri(1-naphthyl)phosphin als Komponente c) enthält.

7. Verfahren nach einem oder mehreren der Ansprüche 1 bis 6, dadurch gekennzeichnet, daß der Katalysator zusätzlich ein Chinon als Komponente d) in einer Menge von 10 bis 5000 mol pro gAtom Palladium enthält.

8. Verfahren nach einem oder mehreren der Ansprüche 1 bis 7, dadurch gekennzeichnet, daß Kohlenmonoxid mit Ethen oder einem Gemisch von Ethen und Propen copolymerisiert wird.